# EUROPÄISCHE PATENTSCHRIFT

(11) **EP 3 966 057 B1**
(45) Veröffentlichungstag und Bekanntmachung des Hinweises auf die Patenterteilung: **24.04.2024**
(21) Anmeldenummer: 20724775.0
(22) Anmeldetag: 04.05.2020
(51) Int. Cl.: B60K 5/12, F16F 1/38

(54) **AGGREGATELAGERUNG IN EINEM FAHRZEUG**
ASSEMBLY MOUNT IN A VEHICLE
PALIER DE GROUPE MOTOPROPULSEUR DANS UN VÉHICULE

(30) Priorität: 07.05.2019 DE 102019206519
(43) Veröffentlichungstag der Anmeldung: 16.03.2022
(73) Patentinhaber: Audi AG, 85045 Ingolstadt (DE)
(72) Erfinder: SCHANTL, Gilbert, 80802 München (DE); BUJAK, Marek, 91809 Wellheim (DE); RUGIES, Stefan, 85057 Ingolstadt (DE); FRENSCH, Hans-Peter, 85055 Ingolstadt (DE); WEBER, Andreas, 85055 Ingolstadt (DE); WEBER, Korbinian, 85049 Ingolstadt (DE); WITTENSCHLÄGER, Thomas, 85049 Ingolstadt (DE)
(74) Vertreter: Bierschneider, Walter
(86) Internationale Anmeldenummer: PCT/EP2020/062297
(87) Internationale Veröffentlichungsnummer: WO 2020/225201

(56) Entgegenhaltungen:
- DE-A1-102011 078 492
- DE-A1-102015 010 507
- US-A1- 2017 152 909

## Beschreibung

Die Erfindung betrifft eine Aggregatelagerung in einem Fahrzeug nach dem Oberbegriff des Anspruches 1 oder nach dem Oberbegriff des Anspruches 6.

Das Antriebsaggregat eines Fahrzeugs, etwa eine Brennkraftmaschine oder eine Elektromaschine, ist üblicherweise in einem Motorraum des Fahrzeugs über schwingungsdämpfende Aggregatelager an einer Tragstruktur, etwa einem Achsträger bzw. Hilfsrahmen, des Fahrzeugaufbaus beispielhaft in einer Dreipunkt- oder Vierpunkt-Lagerung, gelagert.

In einer beispielhaften Aggregatelagerung ist das Antriebsaggregat über ein Aggregatelager an einer aufbauseitigen Lagerkonsole angebunden. Das Aggregatelager ist als ein Gummi-Metall-Lager mit einem hülsenförmigen Lagerkern realisiert, der mittels eines, durch den hülsenförmigen Lagerkern geführten Lagerbolzens mit der aufbauseitigen Lagerkonsole verschraubt ist. Das Aggregategehäuse weist eine Lageraufnahme auf, in der das Aggregatelager eingesetzt (insbesondere eingepresst) ist.

Im Stand der Technik kann die gehäusefeste Lageraufnahme als ein in Axialrichtung beidseitig offenes Lagerauge realisiert sein, das einen hohlzylindrischen Aufnahmeraum aufweist, in dem das Aggregatelager eingepresst ist. Die Anbindung des gehäusefesten Aggregatelagers an der Lagerkonsole kann wie folgt realisiert sein: So kann die Lagerkonsole zwei Konsolenflügel aufweisen, die axial beidseitig des hülsenförmigen Lagerkerns des Aggregatelagers positioniert sind. Die beiden Konsolenflügel und der zwischengeordnete Lagerkern sind unter Bildung eines Axialpressverbands mit Hilfe eines Lagerbolzens miteinander verschraubt. Der Lagerbolzen erstreckt sich mit seinem Bolzenschaft durch den hülsenförmigen Lagerkern, wobei die beiden Konsolenflügel und der hülsenförmige Lagerkern in Axialrichtung zwischen einem Bolzenkopf des Lagerbolzens und einer Schraubenmutter, die mit dem Bolzenschaft verschraubt ist, festgespannt ist.

Im obigen Stand der Technik ist die Anbindung des Aggregatelagers an der Lagerkonsole sowohl mit Bauraumaufwand als auch mit Bauteilaufwand verbunden. Zudem ist ein in Axialrichtung beidseitiger Werkzeugzugang zum Aggregatelager erforderlich, um einen Einbau bzw. Ausbau des Antriebsaggregats zu ermöglichen.

Aus der DE 10 2013 007 976 A1 ist ein Hilfsrahmen für ein Kraftfahrzeug bekannt. Aus der DE 199 09 945 C1 ist ein Fahrschemel für ein Kraftfahrzeug bekannt. Aus der DE 10 2012 012 327 A1 ist eine Anordnung einer Elektromotoreinheit im Motorraum eines Kraftfahrzeuges bekannt. Die DE 10 2011 078 492 A1 offenbart eine gattungsgemäße Aggregat-Befestigungseinrichtung für ein Kraftfahrzeug.

Die Aufgabe der Erfindung besteht darin, eine Aggregatelagerung für ein Antriebsaggregat bereitzustellen, bei der die Aggregatelagerung im Vergleich zum Stand der Technik mit reduziertem Bauraumaufwand und/oder mit reduziertem Bauteilbedarf die mit im Vergleich zum Stand der Technik einer größeren Anzahl von Freiheitsgraden realisierbar ist.

Die Aufgabe ist durch die Merkmale des Anspruches 1 oder des Anspruches 6 gelöst. Bevorzugte Weiterbildungen der Erfindung sind in den Unteransprüchen offenbart.

In einer ersten erfindungsgemäßen Ausführungsform, gemäß dem Anspruch 1, ist die gehäuseseitige Lageraufnahme nicht als ein axial beidseitig offenes Lagerauge realisiert, sondern vielmehr als eine einseitig offene Lagertasse, und zwar mit einem geschlossenen Lagerboden, von dem eine zylindrisch umlaufende Umfangswand hochgezogen ist. Die als Lagertasse ausgebildete gehäusefeste Lageraufnahme stellt einen nur einseitigen Montagezugang für ein Einsetzen, insbesondere ein Einpressen, des Aggregatelagers bereit.

In der ersten erfindungsgemäßen Ausführungsform ist die Anbindung des Aggregatelagers an der Lagerkonsole wie folgt realisiert: So weist der hülsenförmige Lagerkern des Aggregatelagers ein Innengewinde auf, mit dem der Lagerbolzen verschraubt ist. In diesem Fall fällt eine Schraubmutter weg, um die Schraubverbindung mit dem Aggregatelager zu realisieren. Der Lagerbolzen weist einen, mit dem Innengewinde des Lagerkerns in Gewindeeingriff bringbaren Bolzenschaft und einen Bolzenkopf auf. Der Bolzenschaft ist mit Lochspiel durch ein Schraubloch der Lagerkonsole geführt, während der Bolzenkopf auf einem, vom Aggregatelager abgewandten Öffnungsrandbereich des Lagerkonsolen-Schraubloches abgestützt ist. Die Lagerkonsole ist mit ihrem Öffnungsrandbereich zwischen dem Bolzenkopf und einer (der Lagerkonsole zugewandten) Stirnseite des hülsenförmigen Lagerkerns festgespannt.

Im Hinblick auf einen einwandfrei durchführbaren Ein-/Ausschraub-Vorgang des Lagerbolzens ist gemäß der ersten erfindungsgemäßen Ausführungsform dem hülsenförmigen Lagerkern eine Verdrehsicherung zugeordnet. Mittels der Verdrehsicherung verbleibt der hülsenförmige Lagerkern beim Ein-/Ausschrauben des Lagerbolzens drehfest. Die Verdrehsicherung ist zwischen dem Lagerkern und der Lagerkonsole oder alternativ zwischen dem Lagerkern und dem Aggregategehäuse ausgebildet, insbesondere als ineinander greifende Formschlusskonturen.

Für einen einfachen Einbau/Ausbau des Antriebsaggregats in den bzw. aus dem Fahrzeug-Motorraum ist es bevorzugt, wenn die Lagerkonsole zumindest zweiteilig ausgeführt ist. Beispielhaft kann die Lagerkonsole einen karosseriefesten Grundkörper und ein Adapterteil aufweisen. Das Adapterteil kann lösbar, insbesondere in Schraubverbindung, am Grundkörper verbaut sein. Bevorzugt ist es, wenn am Adapterteil sowohl das Lagerkonsolen-Schraubloch, durch den der Bolzenschaft geführt ist, als auch der Lagerkonsolen-Öffnungsrand ausgebildet ist, an dem der Bolzenkopf des Lagerbolzens abstützbar ist. Im Gegensatz dazu kann am Grundkörper weder das Lagerkonsolen-Schraubloch noch der Lagerkonsolen-Öffnungsrandbereich ausgebildet sein.

Der Grundkörper kann in diesem Fall aus einem massiven Vollmaterial gefertigt sein, der ohne Schraubloch für den Lagerbolzen auslegbar ist. Anstelle dessen sind im Grundkörper lediglich durchmesserkleinere Schraublöcher vorgesehen, um das Adapterteil an den Grundkörper zu verschrauben.

Das Adapterteil kann an einer Fügeebene in Anlage mit dem Grundkörper der Lagerkonsole gebracht sein. Beispielhaft kann die Fügeebene als Vertikalebene sich in der Fahrzeughochrichtung erstrecken. In diesem Fall kann die Fügeebene rechtwinklig zur Schraubachse des Lagerbolzens ausgerichtet sein, die beispielhaft in der Fahrzeuglängsrichtung und/oder in der Fahrzeugquerrichtung ausgerichtet ist. Das Adapterteil kann mit einer oder mehreren Schraubverbindung mit dem Grundkörper verschraubt werden. Deren Schraubachsen können bevorzugt (im Hinblick auf eine stabile Anbindung) achsparallel oder rechtwinklig zur Lagerbolzen-Schraubachse ausgerichtet sein.

In einer konkreten Ausführungsform kann das Adapterteil ein schalenförmiges Profilteil sein, und zwar mit dem Öffnungsrandbereich als Profilboden, von dem eine umlaufende Profilwand hochgezogen ist, die radial nach außen in einen Ringflansch übergeht. In diesem Fall kann das Adapterteil mit seinem Ringflansch am Grundkörper verschraubt sein, und zwar unter Bildung eines Bolzenkopf-Bauraumes zwischen dem Profilboden des Adapterteils und der Fügeebene. Der Ringflansch des Adapterteils kann mit Hilfe von Schraubverbindungen am Lagerkonsolen-Grundkörper angebunden sein, deren Schraubachsen achsparallel zur Lagerbolzen-Schraubachse verlaufen sowie umfangsverteilt um diese Lagerbolzen-Schraubachse angeordnet sind.

Gemäß einer zweiten erfindungsgemäßen Ausführungsform ist eine Aggregatelagerung in einem Fahrzeug vorgesehen, bei der ein Antriebsaggregat über ein Aggregatelager an einer karosserieseitigen Lagerkonsole angebunden ist. Das Aggregatelager ist ein Gummi-Metall-Lager mit einem hülsenförmigen Lagerkern, der mittels eines durch den hülsenförmigen Lagerkern geführten Lagerbolzens mit der karosserieseitigen Lagerkonsole verschraubt ist, wobei das Antriebsaggregat ein Aggregategehäuse aufweist, in dem eine Lageraufnahme für das Aggregatelager ausgebildet ist, wobei die gehäuseseitige Lageraufnahme als eine einseitig offene Lagertasse mit einem hohlzylindrischen Aufnahmeraum ausgebildet ist, und zwar mit einem geschlossenen Lagerboden, von dem eine zylindrisch umlaufende Umfangswand hochgezogen ist, und wobei die als Lagertasse ausgebildete Lageraufnahme einen einseitigen Montagezugang für ein Einsetzen oder Einpressen des Aggregatelagers bereitstellt. Gemäß der zweiten erfindungsgemäßen Ausführungsform ist der Bolzenkopf des Lagerbolzens nicht mehr außerhalb der Lagertasse positioniert, sondern anstelle dessen innerhalb der gehäusefesten Lagertasse positioniert, und zwar in einem Bauraum zwischen dem Lagerboden der gehäuseseitigen Lagertasse und einer, dem Lagerboden zugewandten Stirnseite des hülsenförmigen Lagerkerns. Der am Bolzenkopf anschließende Bolzenschaft ist mit Lochspiel durch den hülsenförmigen Lagerkern geführt, wobei der Lagerkern kein Innengewinde aufweisen muss. Der mit Lochspiel durch den hülsenförmigen Lagerkern geführte Lagerbolzen ist mit seiner, den Lagerkern überragenden Bolzenspitze in Gewindeeingriff mit einer Innengewinde-Bohrung der Lagerkonsole bringbar. Auf diese Weise ergibt sich ein Axialpressverband, bei dem der Lagerkern zwischen dem Bolzenkopf und einem Öffnungsrandbereich der Innengewinde-Bohrung der Lagerkonsole festgespannt ist.

Um einen einfachen Einbau/Ausbau des Antriebsaggregates in den bzw. aus dem Fahrzeug-Motorraum zu gewährleisten, ist es bevorzugt, wenn die obige Lagerkonsole insgesamt dreiteilig aufgebaut ist, und zwar aus dem Grundkörper, dem Adapterteil und einem zusätzlichen Spannteil, dessen Funktion später beschrieben ist. Das Adapterteil kann in einer zur Lagerbolzen-Schraubachse parallelen Fügeebene am Grundkörper (insbesondere in Schraubverbindung) angebunden sein. Die Fügeebene kann in diesem Fall sich in einer Horizontalebene erstrecken, die zwischen der Fahrzeuglängsrichtung und der Fahrzeugquerrichtung aufgespannt ist. Das Adapterteil kann mit Hilfe der Schraubverbindungen zwischen dem karosseriefesten Grundkörper und dem Spannteil festgespannt werden Für einen einfachen Werkzeugzugang ist es bevorzugt, wenn die Schraubachsen der Schraubverbindungen rechtwinklig zur Lagerbolzen-Schraubachse ausgerichtet sind.

Nachfolgend sind zwei Ausführungsbeispiele anhand der beigefügten Figuren beschrieben.

Es zeigen:
- Figur 1: eine Aggregatelagerung gemäß einem ersten Ausführungsbeispiel;
- Figur 2 und 3: jeweils Ansichten, die einen Zusammenbau-Vorgang derAggregatelagerung veranschaulichen; und
- Figuren 4 bis 6: jeweils Ansichten entsprechend der Figuren 1 bis 3 gemäß einem zweiten Ausführungsbeispiel.

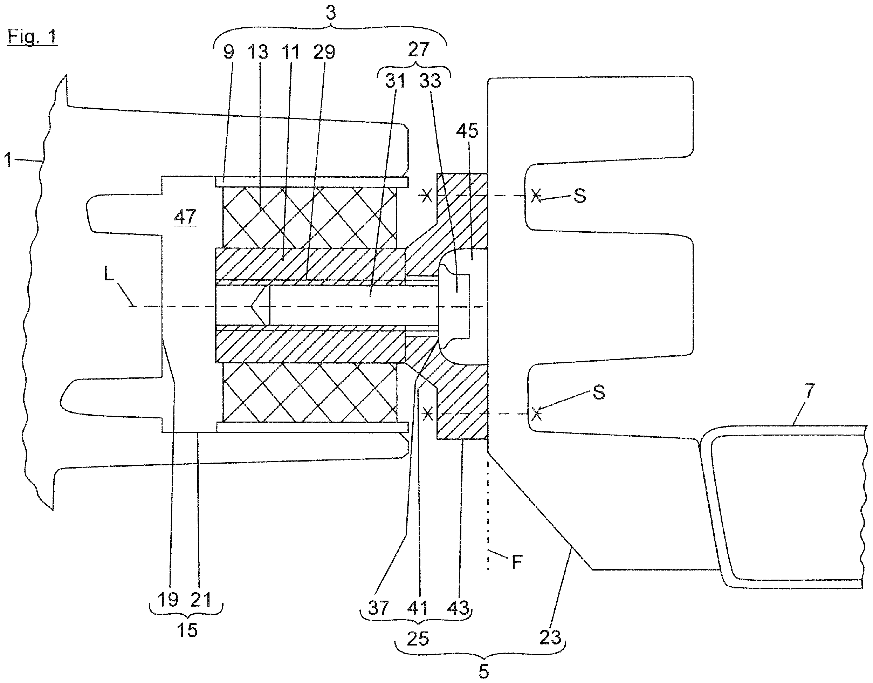

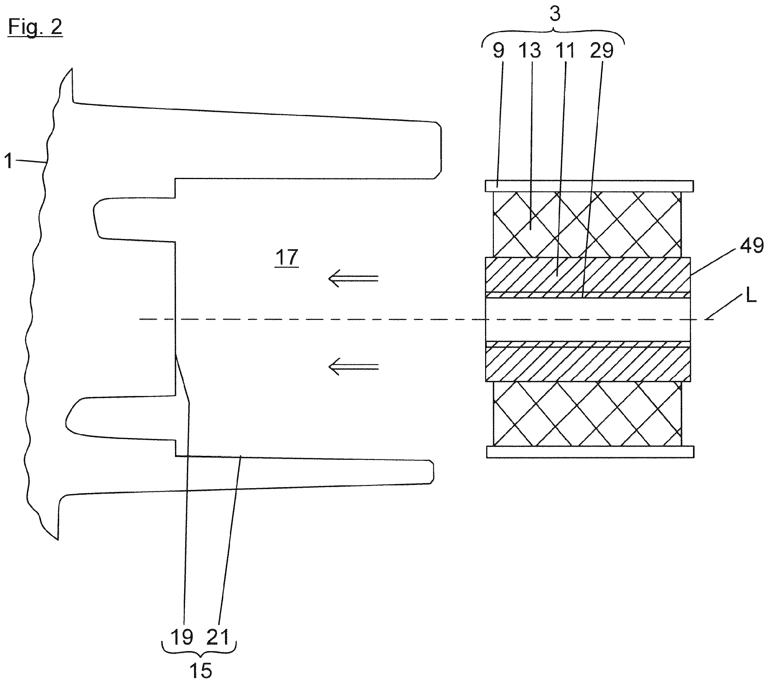

In der Figur 1 ist eine Aggregatelagerung gezeigt, bei der ein Antriebsaggregat mit seinem Aggregategehäuse 1 über ein, als Gummi-Metall-Lager ausgebildetes Aggregatelager 3 an einer karosserieseitigen Lagerkonsole 5 montiert ist. Die Lagerkonsole 5 ist in der Figur 1 an einem angedeuteten Hilfsrahmen 7 befestigt. Der Hilfsrahmen 7 ist wiederum am nicht gezeigten Fahrzeugaufbau des Fahrzeugs angebunden. Das Aggregatelager 3 weist eine gehäusefeste radial äußere Lagerhülse 9 und als karosserieseitige Lagerkomponente einen radial inneren hülsenförmigen Lagerkern 11 auf. Zwischen dem radial inneren Lagerkern 11 und der radial äußeren Lagerhülse ist ein Elastomerkörper 13 einvulkanisiert. In der Figur 1 ist die äußere Lagerhülse 9 des Aggregatelagers 3 in eine am Aggregategehäuse 1 materialeinheitlich und einstückig ausgebildete Lagertasse 15 eingepresst. Die rotationssymmetrisch um eine Lagerachse L ausgebildete Lagertasse 15 weist einen hohlzylindrischen Aufnahmeraum 17 (Figur 2) auf, der von einem geschlossenen Lagerboden 19 und von einer, davon hochgezogenen zylindrisch umlaufenden Umfangswand 21 begrenzt ist.

In der Figur 1 ist die Lagerkonsole 5 zweiteilig ausgeführt, und zwar mit einem am Hilfsrahmen 7 angebundenen Grundkörper 23 und einem Adapterteil 25. Die Anbindung der Lagerkonsole 5 am Aggregatelager 3 ist gemäß der Figur 1 mit Hilfe eines Lagerbolzens 27 realisiert, der die Lagerkonsole 5 am Aggregatelager 3 verschraubt. Hierzu ist der Lagerbolzen 27 in Gewindeeingriff mit einem Innengewinde 29 des hülsenförmigen Lagerkerns 11.

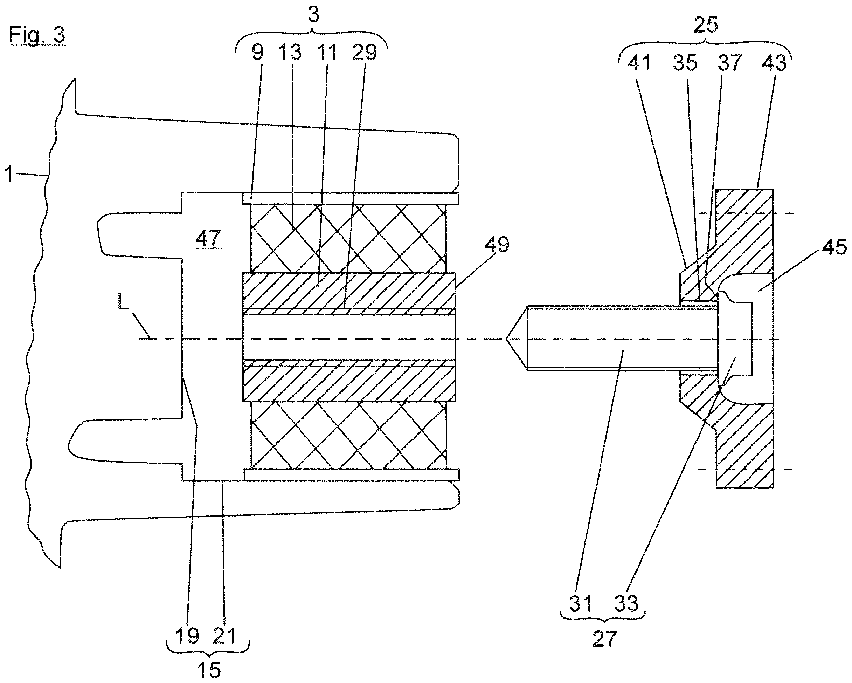

Der Lagerbolzen 27 weist in der Figur 1 einen mit dem Innengewinde 29 des Lagerkerns 11 in Gewindeeingriff befindlichen Bolzenschaft 31 und einen Bolzenkopf 33 auf. Der Bolzenschaft 31 ist in der Figur 1 mit Lochspiel durch ein Schraubloch 35 (Figur 3) des Adapterteils 25 geführt, während der Bolzenkopf 33 auf einem, vom Aggregatelager 3 abgewandten Öffnungsrandbereich 37 des Schraubloches 35 des Adapterteils 25 abgestützt ist. Die Lagerkonsole 5 ist daher mit ihrem Öffnungsrandbereich 37 zwischen dem Bolzenkopf 33 und einer Stirnseite 49 des hülsenförmigen Lagerkerns 11 abgestützt.

Wie aus der Figur 1 weiter hervorgeht, ist das Adapterteil 25 ein schalenförmiges Profilteil, und zwar mit dem Öffnungsrandbereich 37 als Profilboden, von dem eine umlaufende Profilwand 41 hochgezogen ist. Die umlaufende Profilwand 41 geht radial nach außen in einen Ringflansch 43 über, der in der Figur 1 in einer vertikalen Fügeebene F in Anlage mit dem Grundkörper 23 ist. In der Figur 1 ist die Fügeebene F rechtwinklig zur Lagerachse L positioniert. Das Adapterteil 25 ist mit seinem Ringflansch 43 über Schraubverbindungen S am Grundkörper 23 verschraubt. Die Schraubachsen dieser Schraubverbindungen S sind in der Figur 1 achsparallel zur Lagerbolzen-Schraubachse L ausgerichtet. Zudem sind die Schraubverbindungen S umfangsverteilt am Ringflansch 43 des Adapterteils 25 positioniert. In der Figur 1 ist zwischen der Fügefläche F und dem Profilboden (das heißt Öffnungsrandbereich 37) des Adapterteils 25 ein Bauraum 45 bereitgestellt, in dem der Bolzenkopf 33 positioniert ist.

Nachfolgend wird anhand der Figuren 2 und 3 ein Zusammenbauvorgang der in der Figur 1 gezeigten Aggregatelagerung beschrieben: Zunächst wird das Aggregatelager 3 in die Lagertasse 5 des Aggregategehäuses 1 eingepresst (Figur 2). Anschließend wird das Adapterteil 25 durch Einschrauben des Lagerbolzens 27 in das Innengewinde 29 des hülsenförmigen Lagerkerns 11 am Aggregatelager 3 festgespannt (Figur 3). Nach dem Einpressvorgang wird das Antriebsaggregat mit Bezug auf den Lagerkonsolen-Grundkörper 23 so positioniert, dass das Adapterteil 25 am Lagerkonsolen-Grundkörper 23 angeschraubt werden kann.

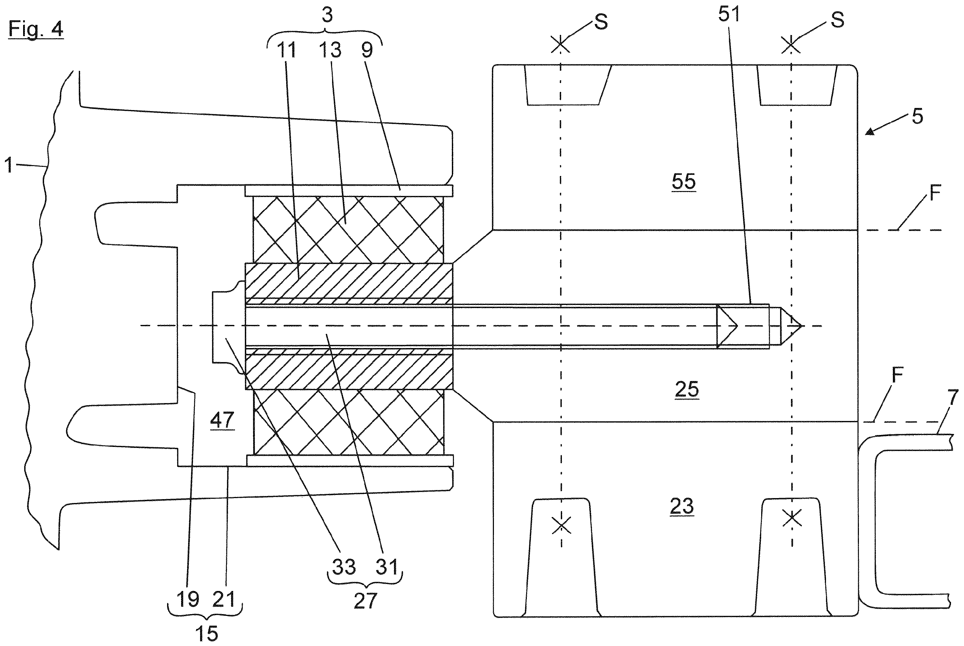

In der Figur 4 ist ein zweites Ausführungsbeispiel gezeigt, bei dem Bolzenkopf 33 des Lagerbolzens 27 nicht mehr außerhalb der gehäusefesten Lagertasse 15 positioniert ist, sondern vielmehr in einem Bauraum 47 zwischen dem Lagerboden 19 und einer, dem Lagerboden zugewandten Stirnseite des hülsenförmigen Lagerkerns 11 angeordnet ist. Der Bolzenschaft 31 ist in der Figur 4 mit Lochspiel durch den hülsenförmigen Lagerkern 11 geführt. Im Gegensatz zum ersten Ausführungsbeispiel ist in der Figur 4 der hülsenförmige Lagerkern 11 nicht mit einem Innengewinde 29 ausgeführt.

Wie aus der Figur 4 weiter hervorgeht, ist der Lagerbolzen 27 mit seiner, den hülsenförmigen Lagerkern 11 überragenden Bolzenspitze in Gewindeeingriff mit einer Innengewinde-Bohrung 51 eines Adapterteils 25 der Lagerkonsole 5 gebracht. Dadurch ergibt sich ein Axialpressverband, bei dem der hülsenförmige Lagerkern 11 zwischen dem Bolzenkopf 33 und einem Öffnungsrandbereich 53 der Innengewinde-Bohrung 51 des Adapterteils 25 der Lagerkonsole 11 festgespannt ist.

In der Figur 4 ist die Lagerkonsole 11 insgesamt dreiteilig aufgebaut, und zwar mit dem Grundkörper 23, dem Adapterteil 25 und einem zusätzlichen Spannteil 55, die allesamt über horizontale Fügeebenen F miteinander verbunden sind. Das Adapterteil 25 ist somit in der Figur 4 in einer, zur Lagerbolzen-Schraubachse L parallelen Fügeebene F am Grundkörper 23 (mit Hilfe von Schraubverbindungen S) angebunden. Wie oben erwähnt, ist die jeweilige Fügeebene F eine Horizontalebene, die zwischen einer Fahrzeuglängsrichtung x und einer Fahrzeugquerrichtung y aufgespannt ist. Das Adapterteil 25 ist in der Figur 4 mit Hilfe von Schaubverbindungen S zwischen dem Grundkörper 23 und dem Spannteil 55 festgespannt. Die Schraubachsen der Schraubverbindungen S sind in der Figur 4 rechtwinklig zur Lagerbolzen-Schraubachse L ausgerichtet.

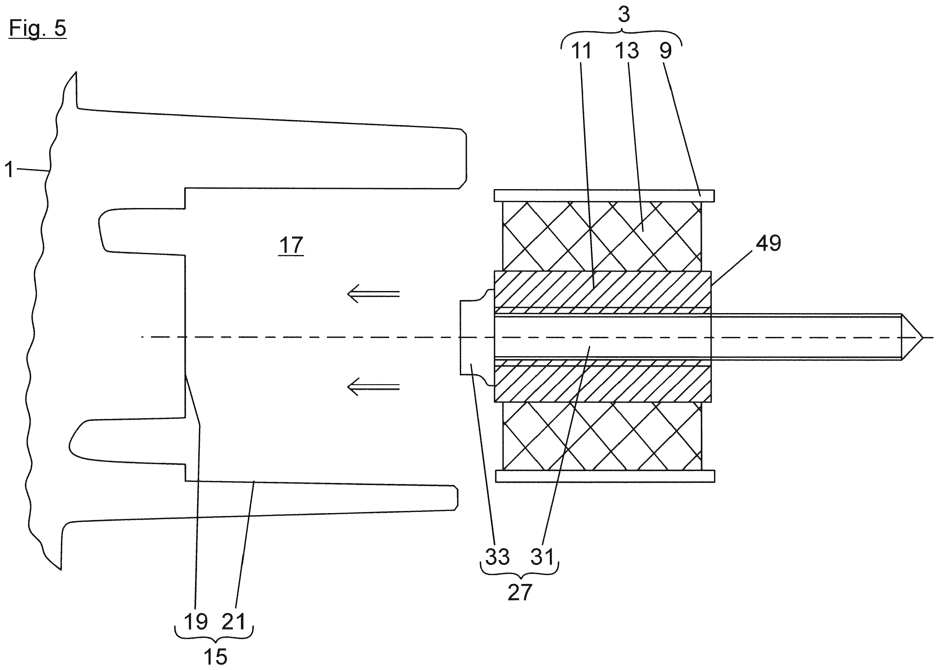

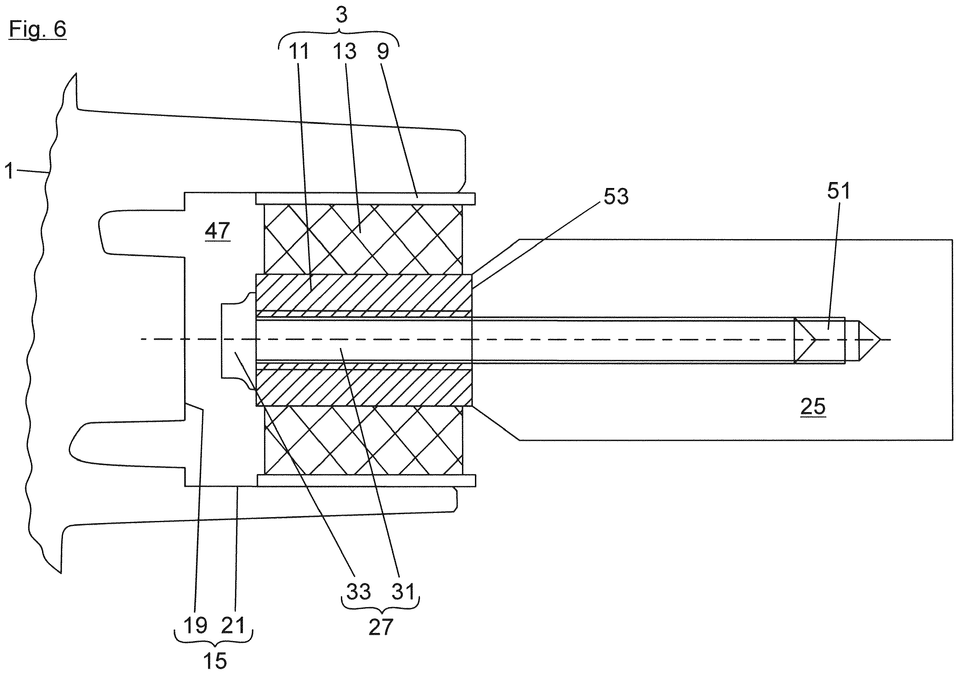

Nachfolgend wird anhand der Figuren 5 und 6 ein Zusammenbau-Vorgang der in der Figur 4 gezeigten Aggregatelagerung beschrieben: Demzufolge wird zunächst der Lagerbolzen 27 lose durch das Aggregatelager 3 geführt (Figur 5). Anschließend wird das Aggregatelager 3 in den hohlzylindrischen Aufnahmeraum 17 der gehäuseseitigen Lagertasse 15 eingepresst (Figur 5). In einem folgenden Prozessschritt wird das Adapterteil 25 (separat von dem Grundkörper 23 und dem Spannteil 55 der Lagerkonsole 5) mit der, über das Aggregatelager 3 hinausragenden Bolzenspitze des Lagerbolzens 27 verschraubt (Figur 6). Dadurch ergibt sich der in der Figur 6 gezeigte Axialpressverband, bei dem der hülsenförmige Lagerkern 11 zwischen dem Bolzenkopf 33 und dem Öffnungsrandbereich 53 (Figur 6) der Innengewindebohrung 51 des Adapterteils 25 festgespannt ist. In einem weiteren Prozessschritt wird das Adapterteil 25 zwischen dem Grundkörper 23 der Lagerkonsole 5 und dem Spannteil 55 mit Hilfe der Schraubverbindungen S (Figur 4) festgespannt.

### BEZUGSZEICHENLISTE

- 1: Aggregategehäuse
- 3: Aggregatelager
- 5: Lagerkonsole
- 7: Hilfsrahmen
- 9: Außenhülse
- 11: Lagerkern
- 13: Elastomerkörper
- 15: Lagertasse
- 17: hohlzylindrischer Aufnahmeraum
- 19: Lagerboden
- 21: Umfangswand
- 23: Grundkörper
- 25: Adapterteil
- 27: Lagerbolzen
- 29: Innengewinde
- 31: Bolzenschaft
- 33: Bolzenkopf
- 35: Schraubloch
- 37: Öffnungsrandbereich
- 41: Profilwand
- 43: Ringflansch
- 45: Bauraum
- 47: Bauraum
- 49: Stirnseite des Lagerkerns
- 51: Innengewinde-Bohrung
- 53: Öffnungsrandbereich
- 55: Spannteil
- F: Fügeebene
- S: Schraubverbindungen

## Patentansprüche

1. Aggregatelagerung in einem Fahrzeug, bei der ein Antriebsaggregat über ein Aggregatelager (3) an einer karosserieseitigen Lagerkonsole (5) angebunden ist, welches Aggregatelager (3) ein Gummi-Metall-Lager mit einem hülsenförmigen Lagerkern (11) ist, der mittels eines durch den hülsenförmigen Lagerkern (11) geführten Lagerbolzens (27) mit der karosserieseitigen Lagerkonsole (5) verschraubt ist, wobei das Antriebsaggregat ein Aggregategehäuse (1) aufweist, in dem eine Lageraufnahme (15) für das Aggregatelager (3) ausgebildet ist, wobei die gehäuseseitige Lageraufnahme (15) als eine einseitig offene Lagertasse mit einem hohlzylindrischen Aufnahmeraum (17) ausgebildet ist, und wobei die als Lagertasse (15) ausgebildete Lageraufnahme einen einseitigen Montagezugang für ein Einsetzen oder Einpressen des Aggregatelagers (3) bereitstellt, wobei der Lagerbolzen (27) einen, mit einem Innengewinde (29) des Lagerkerns (11) in Gewindeeingriff bringbaren Bolzenschaft (31) und einen Bolzenkopf (33) aufweist, wobei der Bolzenschaft (31) mit Lochspiel durch ein Schraubloch (35) der Lagerkonsole (5) geführt ist sowie der Bolzenkopf (33) auf einem, vom Aggregatelager (3) abgewandten Öffnungsrandbereich (37) des Lagerkonsolen-Schraubloches (35) abgestützt ist, und wobei die Lagerkonsole (5) mit ihrem Öffnungsrandbereich (37) zwischen dem Bolzenkopf (3) und einer Stirnseite (49) des hülsenförmigen Lagerkerns (11) festgespannt ist, **dadurch gekennzeichnet, dass** dem hülsenförmigen Lagerkern (11) eine Verdrehsicherung zugeordnet ist, mittels der der hülsenförmige Lagerkern (11) beim Ein-/Ausschrauben des Lagerbolzens (27) drehfest verbleibt, und dass die Verdrehsicherung zwischen dem Lagerkern (11) und der Lagerkonsole (5) oder zwischen dem Lagerkern (11) und dem Aggregategehäuse (1) ausgebildet ist.

2. Aggregatelagerung nach Anspruch 1, **dadurch gekennzeichnet, dass** die Lagerkonsole (5) zumindest zweiteilig aufgebaut ist, und zwar mit einem karosseriefesten Grundkörper (23) und einem Adapterteil (25), das lösbar am Grundkörper (23) verbaut ist, und dass am Adapterteil (25) das Lagerkonsolen-Schraubloch (35), durch den der Bolzenschaft (31) geführt ist, und der Lagerkonsolen-Öffnungsrand (37) ausgebildet ist, an dem der Bolzenkopf (33) abgestützt ist, und dass am Grundkörper (23) weder das Lagerkonsolen-Schraubloch (35) noch der Lagerkonsolen-Öffnungsrandbereich (37) ausgebildet ist.

3. Aggregatelagerung nach Anspruch 2, **dadurch gekennzeichnet, dass** das Adapterteil (25) an einer Fügeebene (F) in Anlage mit dem Grundkörper (23) der Lagerkonsole (5) ist, und dass die Fügeebene (F) rechtwinklig zur Lagerachse (L) des Lagerbolzens (27) ausgerichtet ist, und dass das Adapterteil (25) mit mehreren Schraubverbindungen (S) mit dem Grundkörper (23) verschraubt ist, deren Schraubachsen achsparallel oder rechtwinklig zur Lagerbolzen-Schraubachse (L) ausgerichtet sind.

4. Aggregatelagerung nach Anspruch 2 oder 3, **dadurch gekennzeichnet, dass** das Adapterteil (25) ein schalenförmiges Profilteil ist, und zwar mit dem Öffnungsrandbereich (37) als Profilboden, von dem eine umlaufende Profilwand (41) hochgezogen ist, die radial nach außen in einen Ringflansch (43) übergeht, und dass das Adapterteil (25) mit seinem Ringflansch (43) am Grundkörper (23) verschraubt ist.

5. Aggregatelagerung nach Anspruch 3 oder 4, **dadurch gekennzeichnet, dass** zwischen dem Adapterteil (25) und dem Grundkörper (23) ein Bauraum (45) für den Bolzenkopf (33) des Lagerbolzens (27) bereitgestellt ist.

6. Aggregatelagerung in einem Fahrzeug, bei der ein Antriebsaggregat über ein Aggregatelager (3) an einer karosserieseitigen Lagerkonsole (5) angebunden ist, welches Aggregatelager (3) ein Gummi-Metall-Lager mit einem hülsenförmigen Lagerkern (11) ist, der mittels eines durch den hülsenförmigen Lagerkern (11) geführten Lagerbolzens (27) mit der karosserieseitigen Lagerkonsole (5) verschraubt ist, wobei das Antriebsaggregat ein Aggregategehäuse (1) aufweist, in dem eine Lageraufnahme (15) für das Aggregatelager (3) ausgebildet ist, wobei die gehäuseseitige Lageraufnahme (15) als eine einseitig offene Lagertasse mit einem hohlzylindrischen Aufnahmeraum (17) ausgebildet ist, und zwar mit einem geschlossenen Lagerboden (19), von dem eine zylindrisch umlaufende Umfangswand (21) hochgezogen ist, und wobei die als Lagertasse (15) ausgebildete Lageraufnahme einen einseitigen Montagezugang für ein Einsetzen oder Einpressen des Aggregatelagers (3) bereitstellt, **dadurch gekennzeichnet, dass** ein Bolzenkopf (33) des Lagerbolzens (27) in einem Bauraum (47) zwischen dem Lagerboden (19) der gehäuseseitigen Lagertasse (15) und einer, dem Lagerboden (19) zugewandten Stirnseite des hülsenförmigen Lagerkerns (11) angeordnet ist, und dass ein Bolzenschaft (31) des Lagerbolzens (27) mit Lochspiel durch den hülsenförmigen Lagerkern (11) geführt ist, und dass der Lagerbolzen (27) mit seiner den hülsenförmigen Lagerkern (11) überragenden Bolzenspitze in Gewindeeingriff mit einer Innengewinde-Bohrung (51) der Lagerkonsole (5) bringbar ist, und zwar unter Bildung eines Axialpressverbands, bei dem der Lagerkern (11) zwischen dem Bolzenkopf (33) und einem Öffnungsrandbereich (53) der Innengewinde-Bohrung (51) der Lagerkonsole (5) festgespannt ist.

7. Aggregatelagerung nach Anspruch 6, **dadurch gekennzeichnet, dass** die Lagerkonsole (5) dreiteilig aufgebaut ist, und dass das Adapterteil (25) in einer zur Lagerbolzen-Schraubachse (L) parallelen Fügeebene (F) am Grundkörper (23) in Schraubverbindung (S) angebunden ist, und dass das Adapterteil (25) mittels Schraubverbindung (S) zwischen dem Grundkörper (23) und einem Spannteil (55) festgespannt ist, und dass die Schraubachse der Schraubverbindung (S) rechtwinklig zur Lagerbolzen-Schraubachse (L) ist.

## Claims

1. Unit-mounting arrangement which is located in a vehicle and in the case of which a drive unit is attached to a bodywork-mounted bearing bracket (5) via a unit bearing (3), which unit bearing (3) is a rubber/metal bearing with a sleeve-form bearing core (11), which is screwed to the bodywork-mounted bearing bracket (5) by means of a bearing bolt (27), which is guided through the sleeve-form bearing core (11), wherein the drive unit has a unit housing (1), in which is formed a bearing mount (15) for the unit bearing (3), wherein the bearing mount (15) of the housing is designed in the form of a bearing cup which is open on one side and has a hollow-cylindrical receiving space (17), and wherein the bearing mount, which is designed in the form of a bearing cup (15), provides installation access on one side in order for the unit bearing (3) to be inserted or pressed in, wherein the bearing bolt (27) has a bolt stem (31), which can be brought into threaded engagement with an internal thread (29) of the bearing core (11), and a bolt head (33), wherein the bolt stem (31) is guided with play through a screw-connection hole (35) of the bearing bracket (5) and, in addition, the bolt head (33) is supported on an opening-edge region (37) of the screw-connection hole (35) of the bearing bracket, this opening-edge region being directed away from the unit bearing (3), and wherein the bearing bracket (5) is firmly clamped, by way of its opening-edge region (37), between the bolt head (3) and an end side (49) of the sleeve-form bearing core (11), **characterized in that** the sleeve-form bearing core (11) is assigned a rotation-prevention means, by way of which the sleeve-form bearing core (11) remains fixed in terms of rotation when the bearing bolt (27) is being screwed in/unscrewed, and **in that** the rotation-prevention means is formed between the bearing core (11) and the bearing bracket (5) or between the bearing core (11) and the unit housing (1).

2. Unit-mounting arrangement according to Claim 1, **characterized in that** the bearing bracket (5) is constructed in at least two parts, to be precise with a bodywork-mounted main body (23) and an adapter part (25), which is installed in a releasable manner on the main body (23), and **in that** the screw-connection hole (35) of the bearing bracket, the bolt stem (31) being guided through this screw-connection hole, and the opening edge (37) of the bearing bracket, the bolt head (33) being supported on this opening edge, are formed on the adapter part (25), and **in that** neither the screw-connection hole (35) of the bearing bracket nor the opening-edge region (37) of the bearing bracket is formed on the main body (23).

3. Unit-mounting arrangement according to Claim 2, **characterized in that** the adapter part (25) is in abutment with the main body (23) of the bearing bracket (5) along a joining plane (F), and **in that** the joining plane (F) is oriented at right angles in relation to the bearing axis (L) of the bearing bolt (27), and **in that** the adapter part (25) is screwed to the main body (23) by way of a plurality of screw-connection means (S), of which the screw-connection axes are oriented in an axis-parallel manner, or at right angles, in relation to the screw-connection axis (L) of the bearing bolt.

4. Unit-mounting arrangement according to Claim 2 or 3, **characterized in that** the adapter part (25) is a shell-form profile part, to be precise with the opening-edge region (37) forming a profile base, from which an encircling profile wall (41) rises up, this profile wall merging in the radially outward direction into an annular flange (43), and **in that** the adapter part (25) is screwed to the main body (23) by way of its annular flange (43).

5. Unit-mounting arrangement according to Claim 3 or 4, **characterized in that** an installation space (45) for the bolt head (33) of the bearing bolt (27) is provided between the adapter part (25) and the main body (23).

6. Unit-mounting arrangement which is located in a vehicle and in the case of which a drive unit is attached to a bodywork-mounted bearing bracket (5) via a unit bearing (3), which unit bearing (3) is a rubber/metal bearing with a sleeve-form bearing core (11), which is screwed to the bodywork-mounted bearing bracket (5) by means of a bearing bolt (27), which is guided through the sleeve-form bearing core (11), wherein the drive unit has a unit housing (1), in which is formed a bearing mount (15) for the unit bearing (3), wherein the bearing mount (15) of the housing is designed in the form of a bearing cup which is open on one side and has a hollow-cylindrical receiving space (17), to be precise has a closed bearing base (19), from which a cylindrically encircling circumferential wall (21) rises up, and wherein the bearing mount, which is designed in the form of a bearing cup (15), provides installation access on one side in order for the unit bearing (3) to be inserted or pressed in, **characterized in that** a bolt head (33) of the bearing bolt (27) is arranged in an installation space (47) between the bearing base (19) of the bearing cup (15) of the housing and an end side of the sleeve-form bearing core (11) that is directed towards the bearing base (19), and **in that** a bolt stem (31) of the bearing bolt (27) is guided with play through the sleeve-form bearing core (11), and **in that** the bearing bolt (27) can be brought into threaded engagement with an internally threaded bore (51) of the bearing bracket (5) by way of its bolt tip projecting beyond the sleeve-form bearing core (11), to be precise this resulting in the formation of an axial pressing assembly in which the bearing core (11) is firmly clamped between the bolt head (33) and an opening-edge region (53) of the internally threaded bore (51) of the bearing bracket (5).

7. Unit-mounting arrangement according to Claim 6, **characterized in that** the bearing bracket (5) is constructed in three parts, and **in that** the adapter part (25) is attached to the main body (23) by screw-connection means (S) along a bearing plane (F), which is parallel to the screw-connection axis (L) of the bearing bolt, and **in that** the adapter part (25) is firmly clamped between the main body (23) and a clamping part (55) by way of screw-connection means (S), and **in that** the screw-connection axis of the screw-connection means (S) is at right angles in relation to the screw-connection axis (L) of the bearing bolt.

## Revendications

1. Support de groupe dans un véhicule, dans lequel un groupe motopropulseur est connecté, par le biais d'un palier de groupe (3), à une console de palier (5) côté carrosserie, lequel palier de groupe (3) est un palier en caoutchouc-métal comportant une partie centrale de palier (11) en forme de douille, laquelle partie centrale est vissée sur la console de palier (5) côté carrosserie au moyen d'un boulon de palier (27) guidé à travers la partie centrale de palier (11) en forme de douille, le groupe motopropulseur présentant un carter de groupe (1) dans lequel un logement de palier (15) pour le palier de groupe (3) est réalisé, le logement de palier (15) côté carter étant réalisé sous la forme d'une cuvette de palier, ouverte d'un côté, comportant un espace de logement (17) cylindrique creux, et le logement de palier réalisé sous forme de cuvette de palier (15) fournissant un accès de montage unilatéral pour une insertion ou un enfoncement du palier de groupe (3), le boulon de palier (27) présentant une tige de boulon (31) pouvant être amenée en prise par filetage avec un filetage intérieur (29) de la partie centrale de palier (11) et une tête de boulon (33), la tige de boulon (31) étant guidée avec jeu de trou à travers un trou fileté (35) de la console de palier (5) et la tête de boulon (33) étant supportée sur une région de bord d'ouverture (37) du trou fileté de console de palier (35), laquelle région de bord est opposée au palier de groupe (3), et la console de palier (5) étant serrée fixement avec sa région de bord d'ouverture (37) entre la tête de boulon (3) et un côté frontal (49) de la partie centrale de palier (11) en forme de douille, **caractérisé en ce qu'**une fixation anti-rotation est associée à la partie centrale de palier (11) en forme de douille, fixations anti-rotation au moyen de laquelle la partie centrale de palier (11) en forme de douille demeure bloquée en rotation lors du vissage/dévissage du boulon de palier (27), et **en ce que** la fixation anti-rotation est réalisée entre la partie centrale de palier (11) et la console de palier (5) ou entre la partie centrale de palier (11) et le carter de groupe (1).

2. Support de groupe selon la revendication 1, **caractérisé en ce que** la console de palier (5) est construite au moins en deux parties, et ce avec un corps de base (23) solidaire de la carrosserie et une partie d'adaptateur (25) qui est installée de manière détachable sur le corps de base (23), et **en ce que** le trou fileté de console de palier (35), à travers lequel la tige de boulon (31) est guidée, et le bord d'ouverture de console de palier (37), sur lequel la tête de boulon (33) est supportée, sont réalisés sur la partie d'adaptateur (25), et **en ce que** ni le trou fileté de console de palier (35) ni la région de bord d'ouverture de console de palier (37) ne sont réalisés sur le corps de base (23).

3. Support de groupe selon la revendication 2, **caractérisé en ce que** la partie d'adaptateur (25) est en appui avec le corps de base (23) de la console de palier (5) au niveau d'un plan de jonction (F), et **en ce que** le plan de jonction (F) est orienté perpendiculairement à l'axe de palier (L) du boulon de palier (27), et **en ce que** la partie d'adaptateur (25) est vissée sur le corps de base (23) à l'aide de plusieurs liaisons par vissage (S), liaisons dont les axes de vis sont orientés de manière axialement parallèle ou perpendiculaire à l'axe de vis de boulon de palier (L).

4. Support de groupe selon la revendication 2 ou 3, **caractérisé en ce que** la partie d'adaptateur (25) est une partie profilée en forme de coque, et ce avec la région de bord d'ouverture (37) comme base de profilé, à partir de laquelle une paroi de profilé (41) périphérique est relevée, laquelle se prolonge radialement vers l'intérieur dans une bride annulaire (43), et **en ce que** la partie d'adaptateur (25) est vissée sur le corps de base (23) par sa bride annulaire (43).

5. Support de groupe selon la revendication 3 ou 4, **caractérisé en ce qu'**un espace d'installation (45) pour la tête de boulon (33) du boulon de palier (27) est fourni entre la partie d'adaptateur (25) et le corps de base (23).

6. Support de groupe dans un véhicule, dans lequel un groupe motopropulseur est connecté à une console de palier (5) côté carrosserie par le biais d'un palier de groupe (3), lequel palier de groupe (3) est un palier en caoutchouc-métal comportant une partie centrale de palier (11) en forme de douille, laquelle partie centrale est vissée sur la console de palier (5) côté carrosserie au moyen d'un boulon de palier (27) guidé à travers la partie centrale de palier (11) en forme de douille, le groupe motopropulseur présentant un carter de groupe (1) dans lequel un logement de palier (15) pour le palier de groupe (3) est réalisé, le logement de palier (15) côté carter étant réalisé sous la forme d'une cuvette de palier, ouverte d'un côté, comportant un espace de logement (17) cylindrique creux, et ce avec une base de palier (19) fermée, à partir de laquelle une paroi périphérique (21) s'étendant de manière cylindrique est relevée, et le logement de palier réalisé sous forme de cuvette de palier (15) fournissant un accès de montage unilatéral pour une insertion ou un enfoncement du palier de groupe (3), **caractérisé en ce qu'**une tête de boulon (33) du boulon de palier (27) est disposée dans un espace d'installation (47) entre la base de palier (19) de la cuvette de palier (15) côté carter et un côté frontal, tourné vers la base de palier (19), de la partie centrale de palier (11) en forme de douille, et **en ce qu'**une tige de boulon (31) du boulon de palier (27) est guidée avec jeu de trou à travers la partie centrale de palier (11) en forme de douille, et **en ce que** le boulon de palier (27) peut être amené en prise par filetage avec un alésage à filetage intérieur (51) de la console de palier (5) par sa pointe de boulon dépassant de la partie centrale de palier (11) en forme de douille, et ce en formant un joint à ajustement serré axial, dans lequel la partie centrale de palier (11) est serrée fixement entre la tête de boulon (33) et une région de bord d'ouverture (53) de l'alésage à filetage intérieur (51) de la console de palier (5).

7. Support de groupe selon la revendication 6, **caractérisé en ce que** la console de palier (5) est construite en trois parties, et **en ce que** la partie d'adaptateur (25) est connectée au corps de base (23) dans la liaison par vissage (S) dans un plan de jonction (F) parallèle à l'axe de vis de boulon de palier (L), et **en ce que** la partie d'adaptateur (25) est serrée fixement entre le corps de base (23) et une partie de serrage (55) par le biais d'une liaison par vissage (S), et **en ce que** l'axe de vis de la liaison par vissage (S) est perpendiculaire à l'axe de vis de boulon de palier (L).
